# EUROPEAN PATENT APPLICATION

(11) **EP 4 764 395 A1**
(43) Date of publication of application: **24.06.2026**
(21) Application number: 25225236.6
(22) Date of filing: 18.12.2025
(51) Int. Cl.: G01B 5/06, F01D 21/00, G01B 5/20, G01N 19/00

(54) **VANE RING INSPECTION TOOL AND PROCESS**

(30) Priority: 18.12.2024 US 202463735539 P
(71) Applicant: Pratt & Whitney Canada Corp., (01BE5) Longueuil, QC J4G 1A1 (CA)
(72) Inventor: DESAUTELS, David, (01BE5) Longueuil, J4G 1A1 (CA)
(74) Representative: Dehns

(57) **Abstract**

A method and a tool (18) for performing a dimensional inspection on a vane ring (10), comprises referencing an inspection tool (18) relative to a vane (16) of the vane ring (10) to aim a measuring tool, such as a caliper (C), at predetermined spanwise and chordwise coordinates along the vane (16). Once the inspection has been properly positioned on the vane (16), the measuring tool (18) is used to measure a dimensional parameter (H), such as a vane thickness, at a location corresponding to the predetermined spanwise and chordwise coordinates. Then, the operator determines if the measured dimensional parameter is within acceptable tolerance limits.

## Description

### TECHNICAL FIELD

The disclosure relates generally to gas turbine engines and, more particularly, to a tool and a process for inspecting the vanes of a vane ring.

### BACKGROUND OF THE ART

Vane rings form part of the gas path of gas turbine engines and are typically used to control the velocity and direction of gasses between rotor stages in the turbine sections of the engine. During inspection, the vane rings may be removed from the engine to be examined for any erosion or damage to the vanes. Indeed, any erosion/damage to the vanes may impact the gas flow, thereby potentially reducing the overall performance of the engine. Typically, the vanes are inspected either by using a coordinate measuring machine (CMM) or a 3D scanner. Such traditional dimensional inspection methods can be time consuming and costly. Accordingly, while the traditional dimensional inspection methods are satisfactory to a certain degree, there is a continued need for alternative ways to periodically inspect vane rings of gas turbine engines.

### SUMMARY

In one aspect of the present invention, there is provided a method for inspecting vane ring airfoils. Instead of measuring/scanning the coordinates of the entire airfoil, the method proposes locally measuring a dimensional parameter at a predetermined location on each of the airfoils. For example, the method may entail measuring a maximum thickness in a leading edge region of the airfoil, and determining if the measured parameter is within acceptable tolerance limits.

In an embodiment of the above, the method may involve using a jig-like device for referencing a measuring tool to the vane ring for locally measuring the dimensional parameter at a target location on the vane airfoil. The jig-like device may comprise a base having a plurality of reference surfaces for engagement with the vane ring. The plurality of reference surfaces may include a first reference surface for engagement with an inner or an outer ring of the vane ring for positioning the base in a spanwise direction relative to the vane airfoil. According to some aspects, the first reference surface may be adjustable relative to the base. The plurality of reference surfaces may further include a second reference surface for engagement with a leading edge or a trailing edge of the vane airfoil for positioning the base in a chordwise direction relative to the vane airfoil. A localization aid, for instance, a localization hole may be provided in the base for guiding a measuring tool, such as a caliper, to the vane location where the dimensional parameter is to be measured.

In an embodiment according to any of the previous embodiments, the second reference surface may be configured for engagement with the leading edge of the vane, and the plurality of reference surfaces comprises a third reference surface adapted to rest on a trailing edge portion of the vane airfoil on a pressure or suction side thereof.

In an embodiment according to any of the previous embodiments, the base may be configured to be positioned on the pressure side of the vane airfoil with the third reference surface extending chordwise along a chord of the vane airfoil.

In an embodiment according to any of the previous embodiments, the dimensional parameter to be measured is a maximum thickness between the pressure and suction sides of the vane airfoil in a leading edge region of the vane airfoil, a thickness of the vane airfoil in a trailing end region of the vane airfoil, or a chord of the vane airfoil.

In another aspect of the present invention, there is provided a method of performing a dimensional inspection of a vane ring including an inner ring, an outer ring and a plurality of circumferentially spaced-apart vanes between the inner ring and the outer ring, the method comprising: referencing an inspection tool relative to a vane of the vane ring to aim a measuring tool at predetermined spanwise and chordwise coordinates along the vane; using the measuring tool, measuring a dimensional parameter of the vane at a location corresponding to the predetermined spanwise and chordwise coordinates, wherein the dimensional parameter preferably includes a thickness in a leading end region of the vane; and determining if the measured dimensional parameter is within acceptable tolerance limits.

In an embodiment of the above, referencing the inspection tool relative to the vane comprises abutting a first reference surface of the inspection tool against one of the inner ring and the outer ring.

In an embodiment according to any of the previous embodiments, referencing the inspection tool relative to the vane comprises abutting a second reference surface of the inspection tool with one of a leading edge and a trailing edge of the vane.

In an embodiment according to any of the previous embodiments, the first reference surface is abutted against the inner ring.

In an embodiment according to any of the previous embodiments, the second reference surface is abutted against the leading edge of the vane.

In an embodiment according to any of the previous embodiments, referencing the inspection tool relative to the vane comprises engaging a third reference surface of the inspection tool with one of a pressure side and a suction side of the vane.

In an embodiment according to any of the previous embodiments, the third reference surface is engaged with a trailing end portion of the vane on the pressure side of the vane.

In an embodiment according to any of the previous embodiments, the measuring tool is a caliper, and wherein measuring the dimensional parameter of the vane comprises engaging an end of the caliper in a localization hole extending through a base of the inspection tool.

In a further aspect of the present invention, there is provided an inspection tool for inspecting a vane ring of a gas turbine engine, the vane ring comprising an inner ring, an outer ring and a plurality of circumferentially spaced-apart vanes between the inner ring and the outer ring; the inspection tool comprising: a base having a plurality of reference surfaces including a first reference surface engageable with one of the inner ring and the outer ring, and a second reference surface engageable with one of a leading edge and a trailing edge of a first vane of the plurality of circumferentially spaced-apart vanes; and a localization aid on the base for locating a measuring tool on the first vane at a location set by the engagement of the first and second reference surfaces with the first vane.

In an embodiment of the above, the localization aid is a localization hole extending through the base, the localization hole configured for receiving a tip of the measuring tool.

In an embodiment according to any of the previous embodiments, the inspection tool further comprises a handle rod extending from a back side of the base, the second reference surface provided on a front side of the base opposite to the handle rod.

In an embodiment according to any of the previous embodiments, the first reference surface is provided at a tip of a localization pin adjustably mounted to the base.

In an embodiment according to any of the previous embodiments, the localization pin is threadedly engaged in a threaded hole defined in a peripheral surface of the base.

In an embodiment according to any of the previous embodiments, the second reference surface extends from the front side of the base, the second reference surface engageable with the leading edge of the first vane.

In an embodiment according to any of the previous embodiments, the second reference surface is perpendicular to the first reference surface.

In an embodiment according to any of the previous embodiments, a third reference surface is provided on the front side of the base, the third reference surface engageable with one of a pressure or a suction side surface of the first vane.

In an embodiment according to any of the previous embodiments, the third reference surface is engageable with a trailing end portion on the pressure or the suction side surface of the first vane.

In an embodiment according to any of the previous embodiments, the third reference surface is engageable with the first vane at at least two different locations along a chordwise direction of the first vane.

In an embodiment according to any of the previous embodiments, the second reference surface is segmented.

### DESCRIPTION OF THE DRAWINGS

Reference is now made to the accompanying figures in which:
Fig. 1 is a schematic isometric view of a turbine vane ring of a gas turbine engine;
Figs. 2 to 4 are three-dimensional views of a vane ring inspection tool;
Fig. 5 is a schematic cross-section view of the vane ring inspection tool positioned on a first vane of the turbine vane ring for measuring a thickness of the first vane with a caliper;
Fig. 6 is a three-dimensional view of the vane ring inspection tool positioned on the first vane of the turbine vane ring, the tool manually held in place in an inter-vane space between the first vane and an adjacent second vane of the turbine vane ring;
Fig. 7 is a flow chart of a process for inspecting the turbine vane ring; and
Fig. 8 is a cross-section of a vane of the turbine vane ring and illustrating various dimensional parameters that can be measured to inspect the vane.

### DETAILED DESCRIPTION

The present disclosure is generally directed to an inspection tool and a method for inspecting vane airfoils of vane rings and, more particularly, to a tool and a method for measuring a dimension parameter of a vane airfoil to determine whether this dimension parameter is still within acceptable tolerance limits. This may be done by positioning the inspection tool at a predetermined location on the vane airfoil to be inspected and by measuring the dimension parameter at this predetermined location. To do so, the inspection tool can be provided in the form of a jig-like device having a localisation aid to position a measuring tool, such as a caliper, at the targeted location on the vane airfoil where the dimension parameter is to be measured. Reference surfaces on the inspection tool and the vane ring are used to apply the measuring tool at the chordwise and spanwise coordinates of the predetermined location on the vane airfoil. As will be seen herein after, the localization can be accomplished by abutting reference surfaces of the jig-like device onto corresponding surfaces of the vane ring.

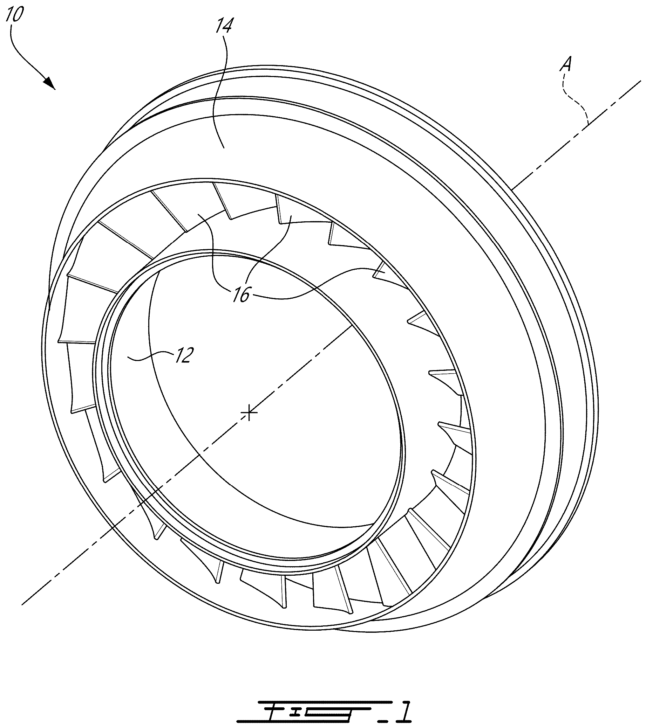

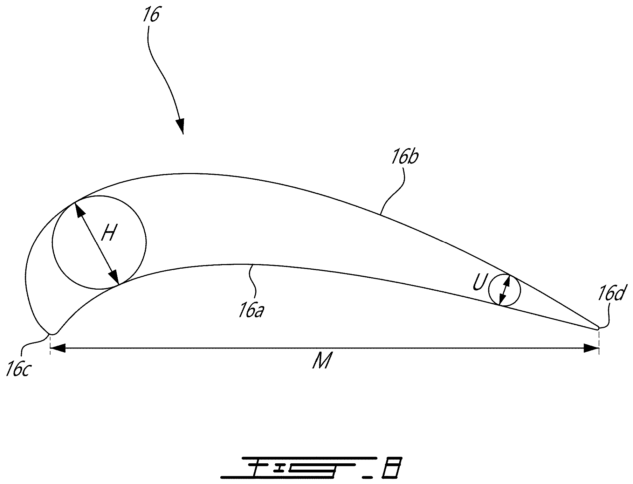

Now referring to Fig. 1, there is shown an example of a turbine vane ring 10 of a gas turbine engine. The turbine vane ring 10 comprises a radially inner ring 12 extending around a central axis A, a radially outer ring 14 concentrically disposed around the radially inner ring 12, and a plurality of circumferentially spaced-apart stator vanes 16 extending from the inner ring 12 to the outer ring 14. As shown in Fig. 8, each vane 16 of the plurality of vanes 16 is provided in the form of an airfoil having opposed pressure and suction sides 16a, 16b extending chordwise from a leading edge 16c to a trailing edge 16d. Each airfoil extends spanwise from a radially outer surface of the inner ring 12 to a radially inner surface of the outer ring 14.

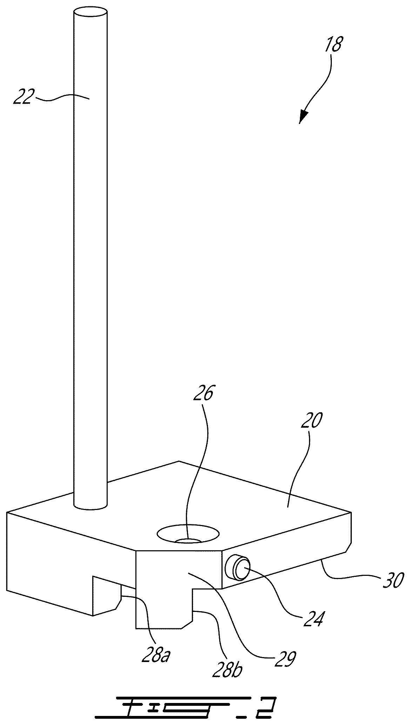

Figs. 2 to 4 illustrate an embodiment of an inspection tool 18 that may be used to mechanically maintain the correct positional relationship between a vane 16 to be inspected and a measuring tool (e.g., a caliper). That is the tool 18 is used to allow the measuring tool to be aimed at a precise location on the vane 16 where a dimension parameter is to be measured to verify that the vane 16 is within acceptable dimensional tolerance limits.

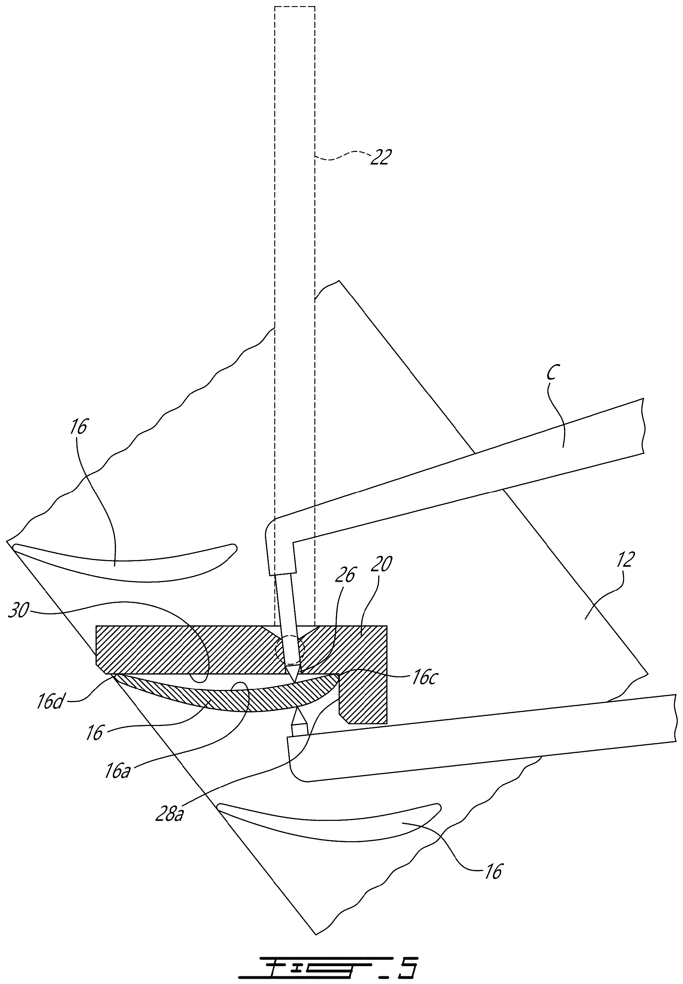

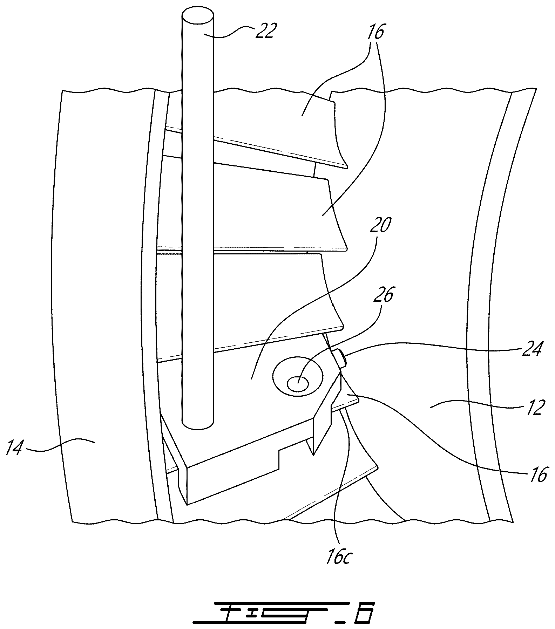

Still referring to Figs. 2 to 4, it can be appreciated that the inspection tool 18 generally comprises a base 20, such as a solid block of metallic material, a handle rod 22 projecting from a back side of the base 20 for allowing an operator to manipulate the tool 18 and hold the base 20 in position against the vane 16, and a reference pin 24 projecting from a peripheral surface of the base 20 in a direction perpendicular to the handle rod 22 for referencing the base 20 in the spanwise direction relative to the vane 16. According to some embodiments, the pin 24 can be adjustable relative to the base 20 to adjustably position the base 20 at different spanwise distances along the vane 16 relative to one of the inner and outer rings 12, 14 of the turbine vane ring 10. For instance, the reference pin 24 could be threadedly engaged in a threaded hole defined in the peripheral surface of the base 20. In this way, the distance by which the pin 24 projects out from the peripheral surface of the base 20 could be adjusted. As will be seen herein after, the reference pin 24 is adapted to be seated against one of the inner and outer rings 12, 14 (the inner ring 12 according to the exemplified inspection process shown in Figs. 5 and 6) to locate the base 20 at the correct spanwise location along the vane 16.

Still referring to Figs. 2-4, it can be appreciated that the base 20 of the inspection tool 18 has a measuring tool localization aid, for instance, a localization hole 26 extending thicknesswise through the base 20 from the back side to the front side thereof. As will be seen herein after, the localization hole 26 is used for positioning the measuring tool (e.g., the caliper) at the desired location on the vane 16 for measuring the predetermined dimension parameter (e.g., the leading-edge maximum thickness).

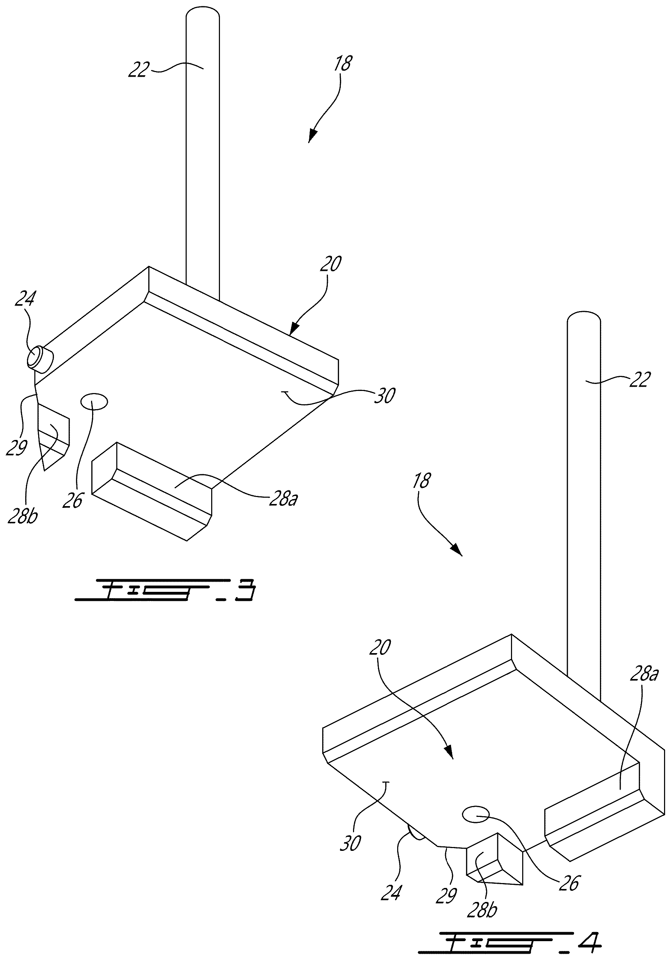

As shown in Figs. 3-5, in addition to the tip of the reference pin 24, which provides a first reference surface for spanwise localization, the inspection tool 18 has second and third reference surfaces 28a, 28b and 30 on the front side of the base 20 opposite to the back side from which the handle rod 22 projects. The second reference surface may include two segments 28a, 28b, which are perpendicular to the third reference surface 30. The second reference surface exemplary formed by the segments 28a, 28b is engageable with one of the leading and trailing edges 16c, 16d of the vane 16 for providing chordwise positioning of the tool 18 relative to the vane 16. According to the example illustrated in Fig. 5, the segmented second reference surface 28a, 28b is abutted against the leading edge 16c of the vane 16 for positioning the localization hole 26 at the desired chordwise location between the leading and trailing edges 16c, 16d of the vane 16. The segments of the second reference surface 28a, 28b may form part of blocks of material integrally projecting at right angles from the front side of the base 20. Alternatively, the reference surface 28a, 28b may be machined into the front side of the base 20 so as to form a shoulder in the front side of the base 20. As shown in Figs. 3 and 4, the reference surface 28a, 28b may extend along only a portion of a peripheral side of the base 20 and a corner 29 of the base 20 may be beveled to facilitate the positioning of the base 20 of the tool 18 between two adjacent vanes 16 of the vane ring 10 and avoid interference with the inner ring 12 against which the tip of the reference pin 24 is seated.

The front side of the base 20 may provide the third reference surface 30. The third reference surface 30 may be configured to extend along the pressure side 16a or the suction side 16b of the vane 16. For example, as shown in Fig. 5, the third reference surface 30 may be configured to extend chordwise over the pressure side 16a (the convex surface) of the vane 16. According to the embodiment illustrated in Fig. 5, the front reference surface 30 is a flat, planar rectilinear surface configured for engagement with the trailing end portion and the leading edge portion of the vane 16. However, according to other embodiments, the third reference surface 30 could have a curved profile matching that of the pressure side 16a or the suction side 16b of the vane 16 to provide a continued contact surface along all the pressure or suction side of the vane 16 in the chordwise direction.

It is further understood that the inspection tool 18 can be customized for any models of vane rings and for the specific dimension parameters to be measured on the vanes of the vane rings. For instance, the thickness of the base 20 between the front and back sides thereof is selected so as to fit in the inter-vane space between two adjacent vanes/airfoils. The size of the base 20 may vary depending on the number of airfoils in the vane ring. Indeed, the more airfoils, the smaller the inter-vane spaces between adjacent vanes and, thus, the need for a smaller, thinner base 20. It is also understood that the tool 18 may adopt various configurations depending on the dimension parameters to be measured. The exemplified tool 18 depicted in Figs. 2-6 is configured for use in measuring the maximum leading-edge thickness (H), as shown in Fig. 8. However, it is understood that the tool 18 could be reconfigured to measure other dimension parameters, such as the chord (M) of the vane or a trailing edge thickness (U), as shown in Fig. 8. It is also understood that the dimension parameters H, M and U are only some of the dimension parameters that could be used to inspect the vane. It is thus understood that each vane airfoil can be measured at different locations along its chord and/or its span.

Referring to Figs. 5 and 6, there will now be described an exemplary method for inspecting a vane of a vane ring. More specifically, according to this example, the inspection tool 18 is configured and used to measure the maximum leading edge thickness H (Fig. 8) of the vanes 16 of the turbine vane ring 10. The method entails using the tool 18 to position the localization hole 26 at the precise location where the maximum leading edge thickness H is to be measured on each of the vanes 16. As shown in Figs. 5 and 6, this can be done by using the handle rod 22 to manipulate the tool 18 and insert the base 20 of the tool 18 in the inter-vane space between two adjacent vanes 16. The localization of the tool 18 relative to the first vane 16 to be inspected is effected via the reference surfaces of the tool 18, including the tip of the reference pin 24 and the reference surfaces 28a, 28b and 30. As shown in Fig. 6, the reference pin 24 is seated against the radially outer surface of the inner ring 12 to locate the localization hole 26 at the right spanwise height to measure the dimension parameter H. As can be appreciated from Fig. 5, the second reference surface 28a, 28b of the tool 18 is abutted against the leading edge 16c of the first vane 16 to be inspected so as to correctly locate the localization hole 26 in the chordwise direction for measuring the dimension parameter H. Still referring to Fig. 5, it can be further appreciated that the third reference surface 30 of the base 20 is seated against the pressure side 16a of the first vane 16 to be inspected. More particularly, according to the illustrated example, the third reference surface 30 rests on the leading and trailing end portions of the convex surface of the pressure side 16a of the first vane 16. The first, second and third reference surfaces 24, 28a, 28b and 30 thus cooperate to precisely locate the localization hole 26 of the base 20 at the location on the vane where the parameter H is to be measured. Once the localization has been completed, the operator can use a measuring tool, such as a caliper C (Fig. 5), to measure the maximum leading edge thickness H of the first vane 16 at the location defined by the localization hole 26. This can be done by inserting the tip of a first branch of the caliper C into the hole 26 in contact with the pressure side 16a of the first vane 16 and by applying the tip of the other branch of the caliper C against the corresponding location on the suction side 16b of the first vane 16. The diameter of the hole 26 is selected to tightly receive the tip of the caliper C and, thus, avoid movement of the caliper C inside the localization hole 26. Also, the hole 26 is properly oriented to favor perpendicularity of measurement with the caliper C. That is the hole 26 might be suitably angled to provide perpendicularity between the tip of the caliper C and the surface of the vane 16. This provides greater accuracy of measurement and a more precise positioning of the caliper C with respect to the vane.

If the so measured parameter H is within acceptable tolerance limits, the operator then proceeds to the next vane. The above steps are repeated for all of the vanes 16. If the measurement is slightly outside of the acceptable tolerance limits, then further investigations can be conducted. For instance, a more elaborated 3D scanning process can be conducted to validate the primary results obtained with the inspection tool 18. However, if the measurement is clearly outside of the acceptable tolerance limits, no further inspection is needed and the part can be scrapped or refurbished if possible.

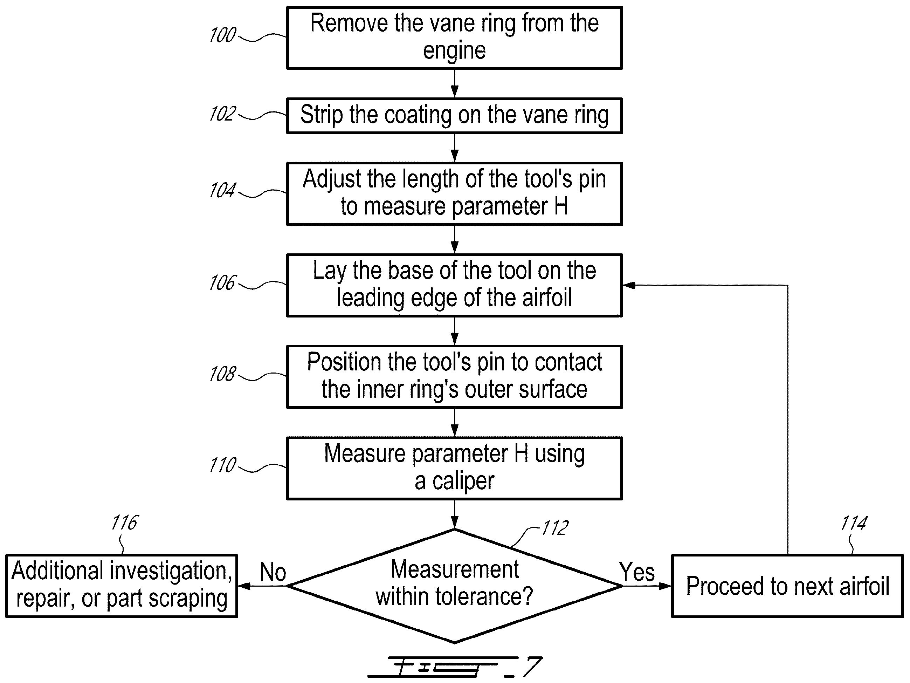

Fig. 7 is a flowchart of a possible process for inspecting a vane ring 10. At 100, the vane ring 10 is removed from the engine. At 102, any coating on the vane ring 10 is removed. At 104, the length of the reference pin 24 of the tool 18 is adjusted according to the dimension parameter (e.g., the maximum leading edge thickness H) to be measured. This is done as part of an initial adjustment, prior to inspection, with the help of appropriate calibration tooling. Once, the length of the pin 24 has been adjusted, the reference pin 24 is secured in position for the remainder of the inspection process. It is understood that the pin 24 can be recalibrated for use with other vane rings when the inspection of a given vane ring has been completed. The base 20 of the tool 18 is then positioned against the leading edge 16c of a first one of the vanes. According to some aspects, this may involve abutting the reference surface 28a, 28b of the base 20 against the leading edge 16c of the first vane. At 108, holding the handle rod 22, the operator positions the reference pin 24 in contact with the outer surface of the inner ring 12. Thereafter, at 110, the operator measures the dimension parameter H using a caliper C. The localization hole 26 in the base allows to aim the caliper C at the right location on the vane 16 to measure the parameter H. Then, at 112, the operator determines if the measured parameter H is within the acceptable tolerance limits. If the measured parameter is within the acceptable tolerance limits, the operator proceeds to the next vane/airfoil as indicated at 114 and steps 106 to 112 are repeated. However, if the measured parameter is slightly outside the tolerances, as indicated at 116, further investigations can be conducted to validate the initial measurement. The further investigations can take various forms, including a 3D scan of the part. If upon further verifications, the initial measurement is confirmed, the vane ring can be scrapped or refurbished whenever possible. If the parameter manually measured with the help of the tool 18 is significantly outside the acceptable tolerance limits, no further investigation is needed. In such instances, the vane ring is either repaired or scrapped.

The above-described inspection method can offer time saving benefits compared to standard CMM/3D scanning procedures.

It is noted that various method or process steps for embodiments of the present disclosure are described in the preceding description and drawings. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. The use of the indefinite article "a" as used herein with reference to a particular element is intended to encompass "one or more" such elements, and similarly the use of the definite article "the" in reference to a particular element is not intended to exclude the possibility that multiple of such elements may be present.

The embodiments described in this document provide non-limiting examples of possible implementations of the present technology. Upon review of the present disclosure, a person of ordinary skill in the art will recognize that changes may be made to the embodiments described herein without departing from the scope of the present technology.

## Claims

1. A method of performing a dimensional inspection of a vane ring (10) including an inner ring (12), an outer ring (14) and a plurality of circumferentially spaced-apart vanes (16) between the inner ring (12) and the outer ring (14), the method comprising:
referencing an inspection tool (18) relative to a vane (16) of the vane ring (10) to aim a measuring tool (C) at predetermined spanwise and chordwise coordinates along the vane (16);
using the measuring tool (C), measuring a dimensional parameter (H) of the vane (16) at a location corresponding to the predetermined spanwise and chordwise coordinates, wherein the dimensional parameter (H) preferably includes a thickness in a leading end region of the vane (16); and
determining if the measured dimensional parameter is within acceptable tolerance limits.

2. The method of claim 1, wherein referencing the inspection tool (18) relative to the vane (16) comprises abutting a first reference surface (24) of the inspection tool (18) against one of the inner ring (12) and the outer ring (14).

3. The method of claim 2, wherein the first reference surface (24) is abutted against the inner ring (12).

4. The method of claim 1, 2 or 3, wherein referencing the inspection tool (18) relative to the vane (16) comprises abutting a second reference surface (28a, 28b) of the inspection tool (18) with one of a leading edge (16c) and a trailing edge (16d) of the vane (16).

5. The method of claim 4, wherein the second reference surface (28a, 28b) is abutted against the leading edge (16c) of the vane (16).

6. The method of any of the preceding claims, wherein referencing the inspection tool (18) relative to the vane (16) comprises engaging a third reference surface (30) of the inspection tool (18) with one of a pressure side (16a) and a suction side (16b) of the vane (16).

7. The method of claim 6, wherein the third reference surface (30) is engaged with a trailing end portion of the vane (16) on the pressure side (16a) of the vane (16).

8. The method of any of the preceding claims, wherein the measuring tool (C) is a caliper (C), and wherein measuring the dimensional parameter (H) of the vane (16) comprises engaging an end of the caliper (C) in a localization hole (26) extending through a base (20) of the inspection tool (18).

9. An inspection tool (18) for inspecting a vane ring (10) of a gas turbine engine, the vane ring (10) comprising an inner ring (12), an outer ring (14) and a plurality of circumferentially spaced-apart vanes (16) between the inner ring (12) and the outer ring (14); the inspection tool (18) comprising:
a base (20) having a plurality of reference surfaces (24, 28a, 28b, 30) including a first reference surface (24) engageable with at least one of the inner ring (12) and the outer ring (14), and a second reference surface (28a, 28b) engageable with at least one of a leading edge (16c) and a trailing edge (16d) of a first vane (16) of the plurality of circumferentially spaced-apart vanes (16); and
a localization aid (26) on the base (20) for locating a measuring tool (18) on the first vane (16) at a location set by the engagement of the first and second reference surfaces (24, 28a, 28b) with the first vane (16).

10. The inspection tool (18) of claim 9, wherein the localization aid (26) is a localization hole (26) extending through the base (20), the localization hole (26) configured for receiving a tip of the measuring tool (C).

11. The inspection tool (18) of claim 9 or 10, further comprising a handle rod (22) extending from a back side of the base (20), the second reference surface (28a, 28b) provided on a front side of the base (20) opposite to the handle rod (22).

12. The inspection tool (18) of any of claims 9 to 11, wherein the first reference surface (24) is provided at a tip of a localization pin (24) adjustably mounted to the base (20), and wherein the localization pin (24) is preferably threadedly engaged in a threaded hole defined in a peripheral surface of the base (20).

13. The inspection tool (18) of any of claims 9 to 12, wherein the second reference surface (28a, 28b) extends from the front side of the base (20), the second reference surface (28a, 28b) engageable with the leading edge (16c) of the first vane (16), and wherein the second reference surface (28a, 28b) is preferably perpendicular to the first reference surface (24).

14. The inspection tool (18) of any of claims 9 to 13, wherein a third reference surface (30) is provided on the front side of the base (20), the third reference surface (30) engageable with one of a pressure or a suction side surface (16a, 16b) of the first vane (16).

15. The inspection tool (18) of claim 14, wherein the third reference surface (30) is engageable with the first vane (16) at at least two different locations along a chordwise direction of the first vane (16), and wherein the third reference surface (30) is preferably engageable with a trailing edge end portion on the pressure or suction side surface (16a, 16b) of the first vane (16).
